(19) **Europäisches Patentamt / European Patent Office / Office européen des brevets**

(11) **EP 3 196 248 A1**

(12) **EUROPEAN PATENT APPLICATION**
published in accordance with Art. 153(4) EPC

(43) Date of publication:
26.07.2017 Bulletin 2017/30

(21) Application number: 15838350.5

(22) Date of filing: 31.08.2015

(51) Int Cl.:
C08L 27/06 (2006.01)   C08K 3/00 (2006.01)
C08K 3/26 (2006.01)    C08K 3/34 (2006.01)
C08K 5/07 (2006.01)    C08K 5/098 (2006.01)
C08K 5/13 (2006.01)

(86) International application number:
PCT/JP2015/004402

(87) International publication number:
WO 2016/035315 (10.03.2016 Gazette 2016/10)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 04.09.2014 JP 2014180114

(71) Applicant: Adeka Corporation
Tokyo 116-0012 (JP)

(72) Inventors:
• MITAMURA, Ryusuke
  Saitama-shi
  Saitama 336-0022 (JP)
• MITSUDERA, Taro
  Saitama-shi
  Saitama 336-0022 (JP)
• TANAKA, Kazumasa
  Saitama-shi
  Saitama 336-0022 (JP)

(74) Representative: J A Kemp
14 South Square
Gray's Inn
London WC1R 5JJ (GB)

(54) **STABILIZER COMPOSITION FOR VINYL CHLORIDE RESIN, VINYL CHLORIDE RESIN COMPOSITION USING SAID STABILIZER COMPOSITION, AND MOLDED ARTICLE OBTAINED FROM SAID RESIN COMPOSITION**

(57) The present invention is a stabilizer composition for vinyl chloride resins comprising: (A) an organic acid calcium salt and/or an organic acid zinc salt, (B) a β-diketone compound and (C) a blue pigment, wherein the ratio by mass (A) : (B) of said components (A) and (B) ranges from 99.9 : 0.1 to 15.0 : 85.0 and the content of said component (C) ranges from 0.1 to 5.0 parts by mass relative to the total of 100 parts by mass of said components (A) and (B).

**Description**

FIELD OF THE INVENTION

The present invention is related to a stabilizer composition for vinyl chloride resins, a vinyl chloride resin composition using said stabilizer composition, and a molded article obtained from said resin composition. From the viewpoints of safety and environmental protection, the present invention is particularly related to the stabilizer composition which can create a vinyl chloride resins, having excellent coloring resistant properties without decreasing thermal stability, by adding no heavy metal stabilizers such as toxic lead and tin, but only adding a small amount of said stabilizer to a vinyl chloride resin; and is related to the vinyl chloride resin composition having excellent thermal stability and thermal resistance, obtained by using said stabilizer composition.

BACK GROUND OF THE INVENTION

Vinyl chloride resins can be used for various purposes, from an agricultural sheet to building materials such as a window frame, since the hardness thereof can be easily adjusted by using a plasticizer. On the other hand, it is known that, due to insufficient stabilities to light and heat, the vinyl chloride resins has a disadvantage of easily causing degradation mainly resulting from dehydrohalogenation, when hot forming and processing are carried out or when products are used.

In order to improve the aforementioned disadvantage, an attempt to improve the stability of vinyl chloride resins has been made by blending various kinds of stabilizers such as a thermal stabilizer, a stabilization auxiliary agent, an antioxidant and an ultraviolet absorber.

Recently, from the viewpoint of environmental protection, the uses of stabilizers containing toxic heavy metals such as lead and cadmium have been regulated. Also, stabilizers containing tin that is a heavy metal, have become problems as they have a negative effect on the human body and environment.

In regard to this situation, barium-zinc composite stabilizers have been proposed. However, an effect of barium on the human body and environment has started to cause concern and the use of barium has tended to be avoided. In recent years, the replacement to further lower-toxic composite stabilizers such as calcium-zinc or calcium-magnesium-zinc composite stabilizers has been required and various kinds of stabilizers are proposed (Patent documents 1 and 2).

However, there is a problem that a large amount of these stabilizers must be added to resins, such as a vinyl chloride resin, in order to impart sufficient stability to the resin, since performances of these stabilizers, such as thermal stability and coloring resistant properties to prevent discoloration to yellow are insufficient.

PRIOR ART DOCUMENT

PATENT DOCUMENT

Patent document 1: JPH09-67489 A
Patent document 2: JP2003-160707 A

SUMMARY OF THE INVENTION

PROBLEMS TO BE SOLVED BY THE INVENTION

Therefore, the first object of the present invention is to provide a stabilizer composition for vinyl chloride resins which can impart excellent coloring resistant properties to the vinyl chloride resins with a small additive amount and without decreasing thermal stability of the resin, even though the heavy metals such as lead, cadmium, tin and barium are not used for the vinyl chloride resins.

The second object of the present invention is to provide a vinyl chloride resin composition having an excellent thermal stability and coloring resistant properties, together with a molded article obtained by molding said resin composition.

The third object of the present invention is to provide a vinyl chloride resin composition excellent in thermal stability, coloring resistant properties and transparency, together with a molded article excellent in transparency which can be obtained by molding said resin composition.

MEANS TO SOLVE THE PROBLEMS

As a result of intensive studies for accomplishing said objects, the inventors have found that excellent thermal stability and excellent coloring resistant properties can be imparted to vinyl chloride resins by using a small amount of stabilizer composition containing a certain amount of organic calcium salt and/or organic zinc salt, a β-diketone compound, and a blue pigment, without using heavy metals such as lead, cadmium, tin and barium, thereby completing the present invention.

Namely, the present inventions are a stabilizer composition for vinyl chloride resins, comprising (A) an organic acid calcium salt and/or an organic acid zinc salt, (B) a β-diketone compound and (C) a blue pigment, wherein the ratio by mass (A) : (B) of said components (A) and (B) ranges from 99.9 : 0.1 to 15.0 : 85.0 and the content of said component (C) ranges from 0.1 to 5.0 parts by mass relative to the total of 100 parts by mass of said components (A) and (B), respectively; a vinyl chloride resin composition containing a vinyl chloride resin and said stabilizer composition for vinyl chloride resins; and also a molded article or a transparent molded article formed from said vinyl chloride resin composition.

It is preferable that the stabilizer composition for vinyl chloride resins of the present invention further contains (D) 1.0 to 600 parts by mass of a hydrotalcite compound and /or (E) 1.0 to 50.0 parts by mass of a phenol antioxidant relative to the total of 100 parts by mass of said components (A) and (B).

In addition, it is preferable that the stabilizer composition for vinyl chloride resins of the present invention does not contain an organic tin compound, and also it is preferable that the stabilizer composition for vinyl chloride resins of the present invention does not contain any lead compound, cadmium compound or barium compound.

It is also preferable that said blue pigment of component (C) is an ultramarine. In particular, it is preferable that, when the stabilizer composition for vinyl chloride resins of the present invention is used for a transparent product, the ratio by mass of said components (A) and (B), (A) : (B) ranges from 90.0 : 10.0 to 20.0 : 80.0.

EFFECT OF THE INVENTION

The stabilizer composition for vinyl chloride resins of the present invention can provide a vinyl chloride resin composition having excellent coloring resistant properties without decreasing thermal stability, by adding a small amount of the stabilizer into the vinyl chloride resin composition without using any high toxic heavy metal stabilizer components such as tin, lead, cadmium and barium.

MODES FOR CARRYING OUT THE INVENTION

Examples of an organic acid calcium salt and/or an organic acid zinc salt of the component (A), which are used for the stabilizer composition for vinyl chloride resins of the present invention (this is expressed simply as "stabilizer composition" hereinafter.), are calcium salts and zinc salts obtained from acids such as organic carboxylic acid, phenols or organic phosphate.

Examples of said organic carboxylic acid are, for example, monovalent carboxylic acids such as acetic acid, propionic acid, butyric acid, valeric acid, caproic acid, enanthic acid, caprylic acid, pelargonic acid, 2-ethylhexylic acid, neodecanoic acid, capric acid, undecanoic acid, lauric acid, tridecanoic acid, myristic acid, palmitic acid, isostearic acid, stearic acid, 12-hydroxystearic acid, behenic acid, montanic acid, benzoic acid, monochloro benzoic acid, p-tert-butyl benzoic acid, dimethylhydroxy benzoic acid, 3,5-ditertiary butyl-4-hydroxy benzoic acid, toluic acid, dimethylbenzoic acid, ethylbenzoic acid, cuminic acid, n-propylbenzoic acid, aminobenzoic acid, N,N-dimethylamino benzoic acid, acetoxybenzoic acid, salicylic acid, p-tert-octyl salicylic acid, elaidic acid, oleic acid, linoleic acid, linolenic acid, thioglycolic acid, mercaptopropionic acid and 3 - (octylthio)propionic acid; bivalent carboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, mesaconic acid, itaconic acid, aconitic acid and thiodipropionic acid; and a monoester thereof or a monoamide compound; trivalent or tetravalent carboxylic acids such as butanetricarboxylic acid, butanetetracarboxylic acid, hemimellitic acid, trimellitic acid, mellophanic acid and pyromellitic acid; a mono- or diester compound of the aforementioned trivalent carboxylic acid, or a mono- or diamide compound of the aforementioned trivalent carboxylic acid, or a mono- to triester compound or a mono- to triamide compound of the aforementioned tetravalent carboxylic acid.

Examples of the aforementioned phenols are, for example, tert-butyl phenol, nonyl phenol, dinonyl phenol, cyclohexyl phenol, phenyl phenol, octyl phenol, phenol, cresol, xylenol, n-butyl phenol, isoamyl phenol, ethyl phenol, isopropyl phenol, isooctyl phenol, 2-ethylhexyl phenol, tert-nonyl phenol, decyl phenol, tert-octyl phenol, isohexyl phenol, octadecyl phenol, diisobutyl phenol, methylpropyl phenol, diamyl phenol, methylisohexyl phenol and methyl tert-octyl phenol.

Examples of the aforementioned organophosphorus acids are, for example, a mono- or dioctyl phosphate, a mono- or di dodecyl phosphate, a mono- or di octadecyl phosphate, a mono- or di-(nonylphenyl) phosphate, phosphonic acid nonylphenyl ester and phosphonic acid stearyl ester.

The organic acid calcium salt and/or organic acid zinc salt of the component (A), which are used for the stabilizer composition of the present invention, may be an acid salt, a neutral salt, a basic salt, or a perbasic complex obtained by neutralizing a part or all of bases of basic salts with a carbonic acid.

The aforementioned organic acid calcium salt and organic acid zinc salt may be each independently used, or may be used together. From the viewpoints of thermal stability and coloring resistant properties of vinyl chloride resins of the present invention, it is preferable to use the organic acid zinc salt, or to use the organic acid calcium salt together with the organic zinc salt.

In the case of using the organic acid calcium salt together with the organic acid zinc salt, it is preferable that the ratio by mass (calcium/zinc) ranges from 0.1 to 2.0, but from 0.2 to 1.5 is even more preferable.

Further, in the case of using for the vinyl chloride resin composition for transparent products, it is preferable to use only the organic acid zinc salt.

From the viewpoints of thermal stability and coloring resistant properties of vinyl chloride resins of the present invention (OK?), it is preferable that an organic carboxylic salt is used for the organic acid calcium salt and/or organic acid zinc salt of the aforementioned component (A).

Additionally, the organic acid used to obtain the organic acid calcium salt and organic acid zinc salt may be only one kind of organic acid or a mixture of two or more kinds of them.

Examples of a β-diketone compound of the component (B) used for the present invention are, for example, acetylacetone, triacetylmethane, 2,4,6-heptatrione, butanoyl acetylmethane, lauroyl acetylmethane, palmitoyl acetylmethane, stearoyl benzoylmethane, palmitoyl benzoylmethane, distearoyl methane, stearoyl acetylmethane, phenylacetyl acetylmethane, dicyclohexylcarbonyl methane, benzoyl formylmethane, benzoyl acetylmethane, dibenzoyl methane, octanoyl benzoylmethane, bis(4-octylbenzoyl)methane, benzoyl diacetylmethane, 4-methoxybenzoyl benzoylmethane, bis(4-carboxymethyl benzoyl)methane, 2-carboxymethyl benzoyl acetyl octylmethane, dehydroacetic acid, ethyl acetoacetate, cyclohexane-1,3-dione, 3,6-dimethyl-2,4-dioxycyclohexane-1-carboxylic acid methyl ester, 2-acetyl cyclohexanone, dimedone and 2-benzoyl cyclohexane, and also metallic salts thereof are useful in the same way. Examples of metallic salts are lithium salt, sodium salt, potassium salt, calcium salt, zinc salt, magnesium salt and aluminum salt. Examples of preferable metallic salts are calcium acetylacetonate and zinc acetylacetonate.

These ß-diketone compounds may be used alone, or more than two kinds of them may be used together.

In the present invention, from the viewpoints of thermal stability and coloring resistant properties of the resin of the present invention, it is preferable to use dibenzoylmethane and/or stearoyl benzoylmethane among these β-diketone compounds.

In the stabilizer composition of the present invention, it is necessary that the ratio by mass of (A) : (B), that is, the ratio of the total mass of organic acid calcium salt and organic acid zinc salt of the component (A) to the mass of the β-diketone compound of the component (B), ranges from 99.9 : 0.1 to 15.0 : 85.0. From the viewpoints of thermal stability and coloring resistant properties of vinyl chloride resins of the present invention, it is preferable that the (A) : (B) ranges from 95.0 : 5.0 to 20.0 : 80.0, but from 90.0 : 10.0 to 25.0 : 75.0 is even more preferable.

In this regard, (A) + (B) = 100.

In the case of using the stabilizer composition of the present invention for transparent products, it is preferable that the aforementioned ratio by mass of (A) : (B) ranges from 90.0 : 10.0 to 20.0 : 80.0, but it is even more preferable that the (A) : (B) ranges from 80.0 : 20.0 to 25.0 : 75.0, and 70.0 : 30.0 to 30.0 : 70.0 is optimal.

From the viewpoints of thermal stability and coloring resistant properties of vinyl chloride resins of the present invention, it is preferable that the blending amount of aforementioned component (A) in the vinyl chloride resin composition of the present invention ranges from 0.01 to 10.0 parts by mass relative to 100 parts by mass of the vinyl chloride resins, but from 0.05 to 5.0 parts by mass is even more preferable, and from 0.1 to 3.0 parts by mass is optimal.

When the blending amount of the component (A) is less than 0.01 parts by mass relative to 100 parts by mass of vinyl chloride resins, the thermal stability and coloring resistant properties are insufficient, and when it is more than 10.0 parts by mass, the thermal stability may be decreased.

From the viewpoints of thermal stability and coloring resistant properties of vinyl chloride resins of the present invention, it is preferable that the blending amount of the aforementioned component (B) ranges from 0.01 to 10.0 parts by mass relative to 100 parts by mass of the vinyl chloride resin composition of the present invention, but from 0.05 to 5.0 parts by mass is even more preferable, and from 0.1 to 3.0 parts by mass is optimal.

When the blending amount of the component (B) is less than 0.01 parts by mass relative to 100 parts by mass of vinyl chloride resins, the coloring resistant properties of vinyl chloride resins of the present invention are insufficient, and when it is more than 10.0 parts by mass, the thermal stability of vinyl chloride resins of the present invention may be decreased.

Examples of a blue pigment of the component (C) used for the stabilizer composition of the present invention are, for example, an ultramarine such as ultramarine blue, phthalocyanine pigments such as phthalocyanine blue, anthraquinone pigments, azurite, smalto, indigo, prussian blue, cerulean blue and cobalt blue. In the present invention, it is preferable to use a blue pigment which does not contain heavy metals.

In the present invention, from the viewpoints of thermal stability and coloring resistant properties of vinyl chloride resins of the present invention, and also from the point of view that a heavy metal is not contained, it is preferable to use the ultramarine among blue pigments. It is particularly preferable to use the ultramarine blue.

In addition, in the case of using blue pigments for transparent products, from a viewpoint of transparency, it is preferable to use the ultramarine, but it is even more preferable to use the ultramarine blue.

The ultramarine blue may be derived from a natural material such as lapis lazuli or may be a synthesized material.

From the viewpoint of coloring resistant properties of vinyl chloride resins of the present invention, it is necessary that the content of blue pigment of the component (C) used for the stabilizer composition of the present invention ranges from 0.1 to 5.0 parts by mass relative to 100 parts by mass of the total amount of the components (A) and (B). Particularly, when used for the transparent products, from the viewpoint of improving the transparency, it is preferable that the content of blue pigment ranges from 0.3 to 3.0 parts by mass, but from 0.5 to 1.5 parts by mass is even more preferable.

It is preferable that the amount of the component (C) used in the vinyl chloride resins composition of the present invention ranges from 0.0005 to 0.03 parts by mass relative to 100 parts by mass of vinyl chloride resins from the viewpoints of coloring resistant properties, and also from the viewpoint of further improving the transparency when used for transparent products, but from 0.001 to 0.02 parts by mass is even more preferable and from 0.003 to 0.01 parts by mass is optimal.

When the amount of the component (C) used is less than 0.0005 parts by mass relative to 100 parts by mass of vinyl chloride resins, the coloring resistant properties are insufficient. In contrast, it is not preferable to use more than 0.03 parts by mass of the component (C), for the reason that, although discoloration to yellow can be suppressed, unnatural coloration may occur, and furthermore, the transparency may be decreased when the component (C) is used for transparent products.

In addition, it is preferable that the stabilizer composition of the present invention contains a hydrotalcite compound as the component (D).

The above hydrotalcite compound is a carbonate double salt compound of magnesium and/or zinc and aluminum. The hydrotalcite compound used for the present invention may be natural or synthesized.

Examples of the aforementioned synthesized hydrotalcite compound are compounds obtained by methods which are described in, for example, JPS46-2280 B, JPS50-30039 B, JPS51-29129 B and JPS61-174270 A.

The hydrotalcite compound used for the present invention is not limited in a crystal structure, a crystal particle diameter, presence or absence of water of crystallization and the amount of water of crystallization etc..

The aforementioned hydrotalcite compound may be a compound treated with a perchloric acid. In addition, the surfaces of these hydrotalcite compounds may be coated with a higher fatty acid such as a stearic acid, a higher fatty acid metallic salt such as an oleic acid alkali metallic salt, an organic sulfonic acid metallic salt such as a dodecyl benzene sulfonic acid alkali metallic salt, a higher fatty acid amide, a higher fatty acid ester or a wax etc., and such hydrotalcite compounds can also be used.

An example of the hydrotalcite compound used as the component (D) of the present invention is the compound expressed in the following general formula (1).

$$Mg_{x1}Zn_{x2}Al_2(OH)_{2(x1+x2)+4} \cdot CO_3 \cdot mH_2O \qquad (1)$$

wherein, x1 and x2 are numbers satisfying conditions expressed by the following formulae respectively and m is a real number.

$$0 \leq x2/x1 < 10, \quad 2 \leq x1+x2 < 20$$

From the viewpoints of thermal stability and coloring resistant properties, it is preferable to use a zinc-modified hydrotalcite compound, as the hydrotalcite compound, that is, the component (D) of the present invention, and it is particularly preferable to use the zinc-modified hydrotalcite compound for a vinyl chloride resin composition for transparent products.

In the present invention, it is preferable to use a compound expressed by the following general formula (2) as a zinc-modified hydrotalcite compound.

$$M_{y1}Zn_{y2}Al_x(OH)_2(CO_3)_{x/2} \cdot mH_2O \qquad (2)$$

wherein, M is magnesium, or magnesium and calcium, and m is 0 or an arbitrary positive number, and also, x, y1 and y2 are numbers satisfying conditions expressed by the following formulae, respectively. $0 < x \leq 0.5$, $y1 + y2 = 1-x$, $y1 \geq y2$,

$0.3 \leqq y1 < 1$, $0 < y2 < 0.5$

Specific examples of the zinc-modified hydrotalcite compounds used in the present invention are as follows.

$$Mg_{0.38}Zn_{0.3}Al_{0.32}(OH)_2(CO_3)_{0.16} \cdot 0.2H_2O$$

$$Mg_{0.45}Zn_{0.23}Al_{0.32}(OH)_2(CO_3)_{0.16}$$

$$Mg_{0.48}Zn_{0.18}Al_{0.34}(OH)_2(CO_3)_{0.17}$$

$$Mg_{0.48}Zn_{0.2}Al_{0.32}(OH)_2(CO_3)_{0.16}$$

$$Mg_{0.5}Zn_{0.17}Al_{0.33}(OH)_2(CO_3)_{0.165} \cdot 0.45H_2O$$

$$Mg_{0.5}Zn_{0.18}Al_{0.32}(OH)_2(CO_3)_{0.16}$$

$$Mg_{0.5}Zn_{0.2}Al_{0.3}(OH)_2(CO_3)_{0.16}$$

$$Mg_{0.5}Zn_{0.2}Al_{0.3}(OH)_2(CO_3)_{0.15} \cdot 0.52H_2O$$

$$Mg_{0.5}Zn_{0.25}Al_{0.25}(OH)_2(CO_3)_{0.125}$$

$$Mg_{0.51}Zn_{0.17}Al_{0.32}(OH)_2(CO_3)_{0.16}$$

$$Mg_{0.52}Zn_{0.16}Al_{0.32}(OH)_2(CO_3)_{0.16} \cdot 0.5H_2O$$

$$Mg_{0.55}Zn_{0.15}Al_{0.32}(OH)_2(CO_3)_{0.15}$$

$$Mg_{0.6}Zn_{0.14}Al_{0.26}(OH)_2(CO_3)_{0.13}$$

$$Mg_{0.6}Zn_{0.16}Al_{0.24}(OH)_2(CO_3)_{0.12}$$

$$Mg_{0.6}Zn_{0.2}Al_{0.2}(OH)_2(CO_3)_{0.1}$$

$$Mg_{0.4}Ca_{0.1}Zn_{0.18}Al_{0.32}(OH)_2(CO_3)_{0.16}$$

$$Mg_{0.3}Ca_{0.2}Zn_{0.2}Al_{0.3}(OH)_2(CO_3)_{0.15}$$

$$Mg_{0.5}Zn_{0.17}Al_{0.33}(OH)_2(CO_3)_{0.17} \cdot 0.5H_2O$$

$$Mg_{0.5}Zn_{0.17}Al_{0.33}(OH)_2(CO_3)_{0.17} \cdot 0.42H_2O$$

$$Mg_{0.6}Zn_{0.16}Al_{0.24}(OH)_2(CO_3)_{0.12} \cdot 0.45H_2O$$

$$Mg_{0.5}Zn_{0.25}Al_{0.25}(OH)_2(CO_3)_{0.13} \cdot 0.39H_2O$$

$$Mg_{0.5}Zn_{0.17}Al_{0.33}(OH)_2(CO_3)_{0.17}$$

$$Mg_{0.5}Zn_{0.25}Al_{0.25}(OH)_2(CO_3)_{0.13}$$

$$Mg_{3/6}Zn_{1/6}Al_{2/6}(OH)_2(CO_3)_{1/6} \cdot 0.5H_2O$$

$$Mg_{3/6}Zn_{1/6}Al_{2/6}(OH)_2(CO_3)_{1/6}$$

Various kinds of aforementioned hydrotalcite compounds are commercially available. Examples include Alkamizer-4 (Alkamizer P-93: a name of product manufactured by Kyowa Chemical Industry Co., Ltd) and Alkamizer-7 (a name of product manufactured by Kyowa Chemical Industry Co., Ltd) or the like. From the viewpoints of thermal stability and coloring resistant properties of vinyl chloride resin composition, and also from the viewpoint of transparency of transparent vinyl chloride resin composition, it is preferable to use the Alkamizer 4 (Alkamizer P-93). In the present invention, only one kind of these zinc-modified hydrotalcite compounds may be used, or two or more kinds of them may be used together.

In particular, in the case of using the stabilization composition of the present invention for the vinyl chloride resin composition for transparent products, it is preferable that a refractive index of the zinc-modified hydrotalcite compound of the component (D) ranges from 1.52 to 1.56, from the viewpoint of transparency.

In the present invention, the zinc-modified hydrotalcite compounds can also be used, wherein the surfaces thereof are coated with higher fatty acids such as a stearic acid, higher fatty acid metallic salts such as an oleic acid alkali metallic salt, organic sulfonic acid metallic salts such as a dodecyl benzene sulfonic acid alkali metallic salt, higher fatty acid amides, higher fatty acid esters or waxes etc. In addition, the zinc-modified hydrotalcite compounds wherein a water of crystallization thereof has been dehydrated can also be used.

In the stabilizer composition of the present invention, from the viewpoints of thermal stability and coloring resistant properties of vinyl chloride resins of the present invention, it is necessary that the amount of the zinc-modified hydrotalcite compound of component (D) used ranges from 1.0 to 600 parts by mass relative to 100 parts by mass of the total of the components (A) and (B), but from 10.0 to 500 parts by mass is even more preferable, and from 20.0 to 400 parts by mass is optimal.

Furthermore, in the case of using the zinc-modified hydrotalcite compound for transparent products, from the viewpoints of thermal stability and coloring resistant properties, and also from the viewpoint of improving the transparency of the transparent products, it is preferable that the amount of the zinc-modified hydrotalcite compound used ranges from 100 to 500 parts by mass relative to 100 parts by mass of the total of the components (A) and (B), but it is even more preferable that it ranges from 250 to 400 parts by mass.

As for the amount of the component (D) used in the vinyl chloride resins composition of the present invention, from the viewpoints of thermal stability and coloring resistant properties of vinyl chloride resins of the present invention, it is preferable that the amount used ranges from 0.01 to 10.0 parts by mass relative to 100 parts by mass of vinyl chloride resins, but from 0.1 to 6.0 parts by mass is even more preferable, and from 0.5 to 4.0 parts by mass is optimal.

When the amount of the component (D) used is less than 0.01 parts by mass relative to 100 parts by mass of vinyl chloride resins, the thermal stability is insufficient. When it is more than 10.0 parts by mass, the coloring resistant properties may be decreased.

It is preferable that the stabilizer composition of the present invention further contains a phenolic antioxidant as the component (E).

Examples of said phenolic antioxidant that is the component (E) used for the present invention are, for example, 2,6-di-tert-butyl-p-cresol, 2,6-diphenyl-4-octadecyloxyphenol, stearyl(3,5-di-tert-butyl-4-hydroxyphenyl)-propionate, distearyl(3,5-di-tert-butyl-4-hydroxybenzyl)phosphonate, thiodiethylene glycol bis [(3,5-di-tert-butyl-4-hydroxyphenyl)-propionate], 1,6-hexamethylenebis[(3,5-di-tert-butyl-4-hydroxyphenyl)propionate], 1,6-hexamethylenebis[(3,5-di-tert-butyl-4-hydroxyphenyl)propionic amide], 4,4'-thiobis(6-tert-butyl-m-cresol), 2,2'-methylenebis(4-methyl-6-tert-butylphenol), 2,2'-methylenebis(4-ethyl-6-tert-butylphenol), bis[3,3-bis(4-hydroxy-3-tert-butylphenyl)butylic acid]glycol ester, 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl] terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate] methane, 2-tert-butyl-4-methyl-6-(2-acryloyloxy-3-tert-butyl-5-methylbenzyl)phenol, 3,9-bis[1,1-dimethyl-2-{(3-tert-butyl-4-hydroxy-5-methylphenyl) propionyloxy}ethyl]-2,4,8,10-tetraoxaspiro[5,5]undecane and triethyleneglycol-bis[(3-tert-butyl-4-hydroxy-5-methylphenyl)propionate]. Only one kind of these phenolic antioxidants may be used, or two or more kinds of them may be used together.

In cases where the phenolic antioxidant is used for the stabilizer composition of the present invention as the component (E), from the viewpoints of thermal stability and coloring resistant properties of vinyl chloride resins of the present invention, it is necessary that the amount used thereof ranges from 1.0 to 50.0 parts by mass relative to 100 parts by mass of the total of the components (A) and (B). It is preferable that it ranges from 3.0 to 30.0 parts by mass, but from 5.0 to 20.0 parts by mass is even more preferable.

In the vinyl chloride resin composition of the present invention, from the viewpoints of thermal stability and coloring resistant properties of vinyl chloride resins of the present invention, it is preferable that the amount of phenolic antioxidant of the component (E) used ranges from 0.01 to 5.0 parts by mass relative to 100 parts by mass of vinyl chloride resins, but from 0.03 to 3.0 parts by mass is even more preferable, and from 0.05 to 1.0 parts by mass is optimal.

When the amount of the component (E) used is less than 0.01 parts by mass relative to 100 parts by mass of vinyl chloride resins, the coloring resistant properties may be insufficient. When the amount of the component (E) used is more than 5 parts by mass, transparency may be decreased, in cases where it is used for transparent products.

In the stabilizer composition of the present invention, from the viewpoints of effects on the environment and toxicity, it is preferable not to contain (organic) tin stabilizer, among metallic stabilizers conventionally used for vinyl chloride resins, and it is even more preferable to contain none of a lead stabilizer, a cadmium stabilizer or a barium stabilizer.

The aforementioned components (D) and (E) may be blended with a stabilizer composition for a vinyl chloride resin composition in advance. Or, when said stabilizer composition is blended with vinyl chloride resins, the aforementioned components (D) and (E) may be blended with the vinyl chloride resins.

The stabilizer composition of the present invention may contain a lubricant, a phosphorous antioxidant, a sulfur antioxidant, a process aid, a polyalcohol compound, an epoxy compound, an ultraviolet absorber, a hindered amine light stabilizer, an impact modifier, a filler, a flame retardant, a flame-retardant auxiliary agent, a plasticizer, a zeolite compound, perchlorates and a foaming agent, other than the aforementioned components, within the range where the effects of the present invention are not damaged. These optional ingredients may be blended with the stabilizer composition of the present invention in advance. Or, when said stabilizer composition is blended with vinyl chloride resins, these optional ingredients may be blended with the vinyl chloride resins.

The vinyl chloride resin composition of the present invention can be blended with a lubricant, a phosphorous antioxidant, a sulfur antioxidant, a process aid, a polyalcohol compound, an epoxy compound, an ultraviolet absorber, a hindered amine light stabilizer, an impact modifier, a filler, a flame retardant, a flame-retardant auxiliary agent, a plasticizer, a zeolite compound, perchlorates and a foaming agent etc., other than the stabilizer for vinyl chloride resins of the present invention, within the range where the effects of the present invention are not damaged.

Examples of said lubricant are hydrocarbon lubricants such as low molecular wax, paraffin wax, polyethylene wax, chlorinated hydrocarbon and fluorocarbon; natural wax lubricants such as carnauba wax and candelilla wax; fatty acid lubricants such as higher fatty acids like lauric acid, stearic acid and behenic acid, or an oxy fatty acid like hydroxystearic acid; aliphatic amide lubricants such as aliphatic amide compounds like stearyl amide, lauryl amide and oleyl amide or alkylene bis aliphatic amides like methylenebis stearylamide and ethylenebis stearylamide; fatty acid alcohol ester lubricants such as fatty acid monovalent alcohol ester compounds like stearyl stearate, butyl stearate and distearyl phthalate, or, fatty acid multivalent alcohol ester compounds like glycerin tristearate, sorbitan tristearate, pentaerythritol tetrastearate, dipentaerythritol hexastearate, polyglycerin polyricinolates and cured castor oil, or, complex ester compounds of monovalent fatty acid and polybasic organic acid with multivalent alcohols like an ester of a mixture of adipic acid and stearic acid with dipentaerythritol; aliphatic alcohol lubricants such as stearyl alcohol, lauryl alcohol and palmityl alcohol; metallic soaps; a montanic acid lubricant such as a partially-saponified montanic acid ester; an acrylic lubricant; and silicone oil. Only one of these lubricants may be used or two or more of these lubricants may be used together.

In the present invention, it is preferable to use a fatty acid alcohol ester lubricant such as a complex ester compound of monovalent fatty acid and polybasic organic acid with multivalent alcohol.

It is preferable that the amount of lubricant used ranges from 0.01 to 5.0 parts by mass relative to 100 parts by mass of vinyl chloride resins from the viewpoint of workability, but from 0.05 to 3.0 parts by mass is even more preferable, and from 0.1 to 2.0 parts by mass is optimal.

Examples of the aforementioned phosphorous antioxidant are triphenyl phosphite, tris(2,4-di-tert-butylphenyl) phosphite, tris(nonylphenyl) phosphite, tris(dinonylphenyl) phosphite, tris(mono, di mixed nonylphenyl) phosphite, bis(2-tert-butyl-4,6-dimethylphenyl) ethyl phosphite, phosphous acid diphenyl ester, 2,2'-methylenebis(4,6-di-tert-butyl phenyl) octylphosphite, diphenyl decyl phosphite, phenyl diisodecyl phosphite, tributyl phosphite, tris(2-ethylhexyl) phosphite, tridecyl phosphite, trilauryl phosphite, phosphous acid dibutyl ester, phosphous acid dilauryl ester, trilauryl trithiophosphite, bis(neopentyl glycol)-1,4-cyclohexane dimethyl diphosphite, bis(2,4-di-tert-butyl phenyl) pentaerythritol diphosphite, bis(2,6-di-tert-butyl-4-methylphenyl) pentaerythritol diphosphite, distearyl pentaerythritol di phosphite, tetra($C_{12}$-$C_{15}$ mixed alkyl)-4,4'-isopropylidene diphenyl phosphite, bis[2,2'-methylenebis(4,6-diamylphenyl)]isopropylidene diphenyl phosphite, hydrogenated-4,4'-isopropylidene diphenol polyphosphite, tetratridecyl[4,4'-butylidene bis(2-tert-butyl-5-methylphenol)] diphosphite, hexakis(tridecyl)-1,1,3-tris(2'-methyl-5'-tert-butyl-4'-hydroxyphenyl) butane triphosphite, 9,10-dihydro-9-oxa-10-phospha phenanthrene-10-oxide and 2-butyl-2-ethylpropanediol-2,4,6-tri-tert-butyl phenol monophosphite.

Only one of these phosphorous antioxidants may be used or two or more of them may be used together.

It is preferable that the amount of phosphorous antioxidant used ranges from 0.01 to 5.0 parts by mass relative to 100 parts by mass of vinyl chloride resins, from the viewpoints of thermal stability and coloring resistant properties, but from 0.03 to 3.0 parts by mass is even more preferable and from 0.05 to 1.0 parts by mass is optimal.

Examples of the aforementioned sulfur antioxidant are, for example, dialkyl thiodipropionates such as dilauryl thiodipropionate, dimyristyl thiodipropionate and distearyl thiodipropionates, and pentaerythritol tetra($\beta$-alkyl thiopropionate).

From the viewpoints of thermal stability and coloring resistant properties, it is preferable that the amount of sulfur antioxidant used ranges from 0.01 to 5.0 parts by mass relative to 100 parts by mass of vinyl chloride resins, but from 0.03 to 3.0 parts by mass is even more preferable, and from 0.05 to 1.0 parts by mass is optimal.

The aforementioned process aid can be selected as appropriate from publicly known process aids. However, it is preferable to use acrylic acid process aids.

Specific examples of acrylic acid process aids are a homopolymer or a copolymer of alkyl methacrylates such as methyl methacrylate, ethyl methacrylate and butyl methacrylate; a copolymer of the above alkyl methacrylates with alkyl acrylates such as methyl acrylate, ethyl acrylate and butyl acrylate; a copolymer of the above alkyl methacrylates with aromatic vinyl compounds such as styrene, α-methyl styrene and vinyl toluene; and a copolymer of the above alkyl methacrylate with a vinyl cyanide compounds such as acrylonitrile and methacrylonitrile. Only one of these acrylic acid process aids may be used, or two or more of them may be used together.

It is preferable that the amount of process aids used ranges from 0.01 to 10 .0 parts by mass relative to 100 parts by mass of vinyl chloride resins, but from 0.05 to 5.0 parts by mass is even more preferable.

Examples of the aforementioned polyalcohol compound are, for example, pentaerythritol, dipentaerythritol, tripentaerythritol, polypentaerythritol, neopentyl glycol, trimethylol propane, ditrimethylol propane, 1,3,5-tris(2-hydroxyethyl)isocyanurate, polyethylene glycol, glycerin, diglycerin, mannitol, maltitol, lactitol, sorbitol, erythritol, xylitol, xylose, sucrose, trehalose, inositol, fructose, maltose and lactose. Two or more of these polyalcohol compounds may be used together.

From the viewpoints of thermal stability and coloring resistant properties of vinyl chloride resins of the present invention, or, further from the viewpoint of transparency when used for transparent products, it is preferable that the amount of polyalcohol compound used ranges from 0.001 to 5.0 parts by mass relative to 100 parts by mass of vinyl chloride resins, but from 0.005 to 3.0 parts by mass is even more preferable and from 0.01 to 2.0 parts by mass is optimal.

Examples of the aforementioned epoxy compound are, for example, epoxidized animal and plant oils such as epoxidized soybean oil, epoxidized linseed oil, epoxidized wood oil, epoxidized fish oil, epoxidized beef tallow oil, epoxidized castor oil and epoxidized safflower oil; and epoxy compounds such as epoxidized methyl stearate, epoxidized butyl stearate, epoxidized 2-ethylhexyl stearate, epoxidized stearic acid stearyl ester, epoxidized polybutadiene, tris(epoxypropyl)isocyanurate, epoxidized tall oil fatty acid ester, epoxidized linseed oil fatty acid ester, bisphenol A diglycidyl ether, vinylcyclohexene diepoxide, dicyclohexene diepoxide, 3,4-epoxycyclohexyl methyl, epoxycyclohexane carboxylate.

Examples of the aforementioned ultraviolet absorber are, for example, 2-hydroxy benzophenones such as 2,4-dihydroxy benzophenone, 2-hydroxy-4-methoxy benzophenone, 2-hydroxy-4-octoxy benzophenone and 5,5'-methylenebis(2-hydroxy-4-methoxy benzophenone); 2-(2-hydroxy phenyl) benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolyl)phenol, polyethylene glycol ester of 2-(2-hydroxy-3-tert-butyl-5-carboxyphenyl)benzotriazole; benzoates such as phenyl salicylate, resorcinol monobenzoate, 2,4-di-tert-butylphenyl-3,5-di-tert-butyl-4-hydroxybenzoate and hexadecyl-3,5-di-tert-butyl-4-hydroxybenzoate; substituted oxanilides such as 2-ethyl-2'-ethoxy oxanilide and 2-ethoxy-4'-dodecyl oxanilide; and cyanoacrylates such as ethyl α-cyano-β,β-diphenyl acrylate and methyl 2-cyano-3-methyl-3-(p-methoxyphenyl)acrylate.

Examples of the aforementioned hindered amine light stabilizer are, for example, hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)butane tetracarboxylate, tetrakis(1,2,2,6,6-pentamethyl-4-piperidyl)butane tetracarboxylate, bis(1,2,2,6,6-pentamethyl-4-piperidyl)di(tridecyl)-1,2,3,4-butane tetracarboxylate, bis(1,2,2,6,6-pentamethyl-4-piperidyl)-2-butyl-2-(3,5-di-tert-butyl-4-hydroxy benzyl)malonate, 1-(2-hydroxyethyl)-2,2,6,6-tetramethyl-4-piperidinol/ diethyl succinate polycondensation product, 1,6-bis(2,2,6,6-tetraethyl-4-piperidylamino)hexane/dibromoethane polycondensation product, 1,6-bis(2,2,6,6-tetramethyl-4-piperidylamino)hexane/2,4-dichloro-6-morpholino-s-triazine polycondensation product, 1,6-bis(2,2,6,6-tetramethyl-4- piperidylamino)hexane/ 2,4-dichloro-6-tert-octylamino-s-triazine polycondensation product, 1,5,8,12-tetrakis[2,4-bis(N-butyl-N-(2,2,6,6-tetramethyl-4-piperidyl)amino)-s -triazine-6-yl]-1,5,8,12-tetraazadodecane, 1,5,8,12-tetrakis [2,4-bis(N-butyl-N-(1,2,2,6,6-pentamethyl-4-piperidyl)amino)-s-triazine-6-yl] -1,5,8,12-tetraazadodecane, 1,6,11-tris[2,4-bis(N-butyl-N-(2,2,6,6-tetramethyl-4-piperidyl)amino)-s-triazi ne-6-ylamino]undecane and 1,6,11-tris[2,4-bis(N-butyl-N-(1,2,2,6,6-pentamethyl-4-piperidyl)amino)-s-tri amine--6-ylamino]undecane.

Examples of the aforementioned impact modifier are polybutadiene, polyisoprene, polychloroprene, fluorine-containing rubber, styrene-butadiene copolymer rubber, methyl methacrylate-butadiene-styrene copolymer, methyl methacrylate-butadiene-styrene graft copolymer, acrylonitrile-styrene-butadiene copolymer rubber, acrylonitrile-styrene-butadiene graft copolymer, styrene-butadiene styrene block copolymer rubber, styrene-isoprene-styrene copolymer rubber, styrene-ethylene-butylene-styrene copolymer rubber, ethylene-propylene copolymer rubber, ethylene-propylene-diene copolymer rubber (EPDM), silicone-containing acrylic rubber, silicone/acrylic composite rubber graft copolymer and silicone rubbers. In this regard, examples of diene of the above ethylene-propylene-diene copolymer rubber (EPDM) are 1,4-hexanediene, dicyclopentadiene, methylene norbornene, ethylidene norbornene and propenyl norbornene.

Specific examples of the aforementioned filler are calcium carbonate, calcium oxide, calcium hydroxide, zinc hydroxide, zinc carbonate, zinc sulfide, magnesium oxide, magnesium hydroxide, magnesium carbonate, aluminum oxide, aluminum hydroxide, mineral silicates such as sodium aluminosilicate, hydrocalumite, aluminum silicate, magnesium silicate, calcium silicate, zeolite; activated white earth, talc, clay, colcothar, asbestos, antimony trioxide, silica, glass bead, mica, sericite, glass flakes, wollastonite, potassium titanate, PMF, gypsum fiber, zonolite, MOS, phosphate fiber, glass fiber, carbon fiber and aramid fiber.

Examples of the aforementioned flame retardant and flame-retardant auxiliary agent are a triazine ring-containing compound, a metallic hydroxide, and also inorganic phosphorus, halogen flame retardants, silicone flame retardants, phosphoric acid ester flame retardants, condensation phosphoric acid ester flame retardants, intumescent flame retardants, an antimony oxide such as an antimony trioxide, other inorganic flame-retardant auxiliary agents and organic flame-retardant auxiliary agents.

Examples of the aforementioned triazine ring-containing compound are, for example, melamine, ammeline, benzoguanamine, acetoguanamine, phthalo diguanamine, melamine cyanurate, melamine pyrophosphate, butylene diguanamine, norbornene diguanamine, methylene diguanamine, ethylene dimelamine, trimethylene dimelamine, tetramethylene dimelamine, hexamethylene dimalamine and 1,3- hexylene dimelamine.

Examples of the aforementioned metallic hydroxide are magnesium hydroxide, aluminum hydroxide, calcium hydroxide, barium hydroxide, zinc hydroxide, and Kisuma 5A (commercial name of magnesium hydroxide: manufactured by Kyowa Chemical Industry Co., Ltd).

Examples of the aforementioned phosphoric acid ester flame retardants are, for example, trimethyl phosphate, triethyl phosphate, tributyl phosphate, tris(butoxyethyl) phosphate, tris-chloroethyl phosphate, tris-dichloropropyl phosphate, triphenyl phosphate, tricresyl phosphate, cresyl diphenyl phosphate, trixylenyl phosphate, octyl diphenyl phosphate, xylenyl diphenyl phosphate, tris-isopropylphenyl phosphate, 2-ethylhexyl diphenyl phosphate, t-butylphenyl diphenyl phosphate, bis(t-butylphenyl)phenyl phosphate, tris(t-butylphenyl)phosphate, isopropylphenyl diphenyl phosphate, bis(isopropylphenyl)diphenyl phosphate and tris(isopropylphenyl)phosphate.

Examples of the aforementioned condensation phosphoric acid ester flame retardants are 1,3-phenylene bis(diphenylphosphate), 1,3-phenylene bis(dixylenylphosphate) and bisphenol A bis(diphenylphosphate). Examples of the aforementioned intumescent flame retardants are ammonium salt and amine salt of (poly)phosphoric acid such as ammonium polyphosphate, melamine polyphosphate, piperazine polyphosphate, ammonium pyrophosphate, melamine pyrophosphate and piperazine pyrophosphate.

Examples of the aforementioned other inorganic flame-retardant auxiliary agents are, for example, inorganic compounds such as titanium oxide, aluminum oxide, magnesium oxide and talc, and surface-treated products thereof. For example, various types of products on the market such as TIPAQUE R-680 (commercial name of titanium oxide manufactured by ISHIHARA SANGYO Co., LTD.) and Kyowa MAG 150 (commercial name of magnesium oxide manufactured by Kyowa Chemical Industry Co., Ltd) can be used.

Examples of the aforementioned other organic flame-retardant auxiliary agents are, for example, pentaerithritol and dipentaerithritol.

Examples of the aforementioned plasticizers are phthalate plasticizers such as dibutyl phthalate, butylhexyl phthalate, diheptyl phthalate, dioctyl phthalate, diisononyl phthalate, diisodecyl phthalate, dilauryl phthalate, dicyclohexyl phthalate and dioctyl terephtalate; adipate plasticizers such as dioctyl adipate, diisononyl adipate, diisodecyl adipate and di(butyldiglycol) adipate; phosphate plasticizers such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate and octyl diphenyl phosphate; polyester plasticizers obtained by reacting polyalcohols such as ethylene glycol, diethylene glycol, triethylene glycol, 1,2-propylene glycol, 1,3-propylene glycol, 1,3-butanediol, 1,4-butanediol, 1,5-hexanediol, 1,6-hexanediol and neopentyl glycol, with dibasic acids such as oxalic acid, malonic acid, succinic acid, glutaric acid, adipic acid, pimelic acid, suberic acid, azelaic acid, sebacic acid, phthalic acid, isophthalic acid and terephthalic acid, wherein a monohydric alcohol and/or a monocarboxylic acid can be used as a stopper, if necessary, in the esterification reaction; and other examples are, tetrahydrophthalic acid plasticizers, azelaic acid plasticizers, sebacic acid plasticizers, stearic acid plasticizers, citric acid plasticizers, trimellitic acid plasticizers, pyromellitic acid plasticizers and biphenylene polycarboxylic acid plasticizers or the like.

The aforementioned zeolite compound is an aluminosilicate of alkali metal or alkali earth metal having a special kind of three dimensional zeolite crystal structure. Typical examples thereof are A-type, X-type, Y-type and P-type zeolites; aluminosilicate of mordenite group, analcite group and sodalite group; clinoptilolite, erionite and chabazite. These zeolite compounds may be aqueous materials having a water of crystallization (so-called zeolitic water), or may be anhydrides wherein the water of crystallization was removed. It is preferable that the particle diameter of the zeolite compound ranges from 0.1 to 50 $\mu$m. In the present invention, it is particularly preferable to use the zeolite compound having 0.5 to 10 $\mu$m particle diameter.

Examples of the aforementioned perchlorate are a perchlorate metallic salt, an ammonium perchlorate and a perchlorate-treated silicate salt. Examples of metallic salt are salts such as lithium, sodium, potassium, calcium, magnesium, strontium, barium, zinc, cadmium, lead and aluminum. From the viewpoint of toxicity, it is preferable not to use the salts of barium, cadmium and lead. The aforementioned perchlorate metallic salt may be an anhydride or a hydrate salt, and also may be materials dissolved in solvents such as alcohols, like a butyldiglycol and butyldiglycol adipate, or esters, and dehydrated products thereof.

Examples of the aforementioned foaming agent are degradable organic foaming agents such as azodicarbonamide, azobisisobutyronitrile, p,p'-oxybis benzenesulfonyl hydrazide, N,N'-nitrosopentamethylene tetramine, p-toluenesulfonyl semicarbazide and trihydrazo triazine, and degradable inorganic foaming agents such as sodium bicarbonate, ammonium carbonate, ammonium bicarbonate, ammonium nitrite, azide compounds and sodium borohydride.

Stabilization auxiliary agents, generally used for vinyl chloride resins, can be further added to the vinyl chloride resins composition of the present invention, within the range where the effects of the present invention are not damaged.

Examples of such stabilization auxiliary agents are diphenylthiourea, anilinodithiotriazine, melamine, benzoic acid, cinnamic acid, p-tert-butylbenzoic acid, zeolite and perchlorate or the like.

The vinyl chloride resin composition of the present invention can further blend additives usually used for the vinyl chloride resins, if necessary, within the range where the effects of the present invention are not damaged. Examples of said additives are a crosslinking agent, an antistatic agent, a tarnish inhibitor, a plate-out inhibitor, a surface treatment agent, a fluorescent agent, a mildewcide, a disinfectant, a metal deactivator, a mold lubricant and a pigment other than a blue pigment.

The vinyl chloride resin composition of the present invention contains vinyl chloride resins and the stabilization composition of the present invention. It is necessary that the amount of the stabilization composition of the present invention used ranges from 0.1 to 10.0 parts by mass relative to 100 parts by mass of vinyl chloride resins, from the viewpoints of thermal stability and coloring resistant properties, and from 1.0 to 8.0 parts by mass is preferable, but from 2.0 to 6.0 parts by mass is even more preferable.

Examples of vinyl chloride resins used for the present invention are vinyl chloride resins such as polyvinyl chloride, chlorinated polyvinyl chloride, polyvinylidene chloride, chlorinated polyethylene, vinyl chloride-vinyl acetate copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride terpolymer, vinyl chloride-styrene-acrylonitrile copolymer, vinyl chloride-butadiene copolymer, vinyl chloride-isoprene copolymer, vinyl chloride-chlorinated propylene copolymer, vinyl chloride-vinylidene chloride-vinyl acetate terpolymer, vinyl chloride-maleic acid ester copolymer, vinyl chloride-methacrylic acid ester copolymer, vinyl chloride-acrylonitrile copolymer and vinyl chloride resins of vinyl chloride- various kinds of vinyl ether copolymer;_and mutually blended mixtures thereof, or mixtures, block copolymer and graft copolymer thereof with other synthetic resins which contain no chlorine, such as acrylonitrile-styrene copolymer, acrylonitrile-butadiene-styrene copolymer, ethylene-vinyl acetate copolymer, ethylene-ethyl(meth)acrylate copolymer, and polyester etc.. These vinyl chloride resins may be a mixture obtained by blending two or more kinds of vinyl chloride resins. It is preferable that the vinyl chloride resins used for the present invention is a polyvinyl chloride resin in particular, from the view point of providing thermal stability and coloring resistant properties to the polyvinyl chloride resins of the present invention.

The polymerization procedure of vinyl chloride resins used for the present invention is not limited in particular. It is possible to use vinyl chloride resins obtained by bulk polymerization, solution polymerization, suspension polymerization and emulsion polymerization etc..

The vinyl chloride resin composition of the present invention can be easily processed by all processing methods such as rolling process method, extrusion process method, melt casting method and pressure molding process method.

The vinyl chloride resin composition of the present invention can be used for manufacturing a various kinds of molded products such as piping materials like a pipe, a joint and piping parts; building materials-building products such as a wall material, a floor material, a window frame, a corrugated panel and a gutter; interior and exterior materials for automobiles; coating materials for electric wire; agricultural materials; food packaging materials; general merchandises like a packing, a gasket, a hose, a sheet, a tray, a bottle and a toy; a decorative laminate, an industrial plate and IC case. Also, the vinyl chloride resin composition of the present invention is especially suitable for transparent products

Hereafter, the present invention will be explained further in detail using examples and comparative examples. However, the present invention should not be limited by these examples and comparative examples at all.

[Examples from 1 to 8]

<Manufacture of stabilization composition>

Components described in the following Table 1 were mixed to manufacture the stabilization compositions from 1 to 8 of the present invention.

[Table 1]

| | | Example | | | | | | | |
|---|---|---|---|---|---|---|---|---|---|
| | | 1 | 2 | 3 | 4 | 5 | 6 | 7 | 8 |
| Component (A) | Zinc laurate | 35.0 | 35.0 | 35.0 | 35.0 | 35.0 | 35.0 | | |
| | Zinc stearate | | | | | | | 60.0 | 60.0 |
| | Calcium stearate | | | | | | | 20.0 | 20.0 |
| Component (B) | Stearoyl benzoyl methane | 65.0 | 65.0 | 65.0 | 65.0 | | | | |
| | Dibenzoyl methane | | | | | 65.0 | 65.0 | 20.0 | 20.0 |
| Component (C) | Ultramarine blue*1 | 0.6 | 1.2 | 2.4 | 0.3 | 0.6 | 1.2 | 0.25 | 0.5 |
| Component (D) | Alkamizer P-93*2 | 300.0 | 300.0 | 300.0 | 300.0 | 300.0 | 300.0 | | |
| | Magceler 1*3 | | | | | | | 40.0 | 40.0 |
| Component (E) Phenolic antioxidant*4 | | 10.0 | 10.0 | 10.0 | 10.0 | 10.0 | 10.0 | 5.0 | 5.0 |
| Polyalcohol Compound*5 | | | | | | | | 10.0 | 10.0 |
| (parts by mass) | | | | | | | | | |

*1 : manufactured by HOLLIDAY PIGMENTS
*2 : zinc -modified hydrotalcite ($Mg_{3.0}ZnAl_2(OH)_{12}(CO_3) \cdot 3H_2O$ manufactured by Kyowa Chemical Industry Co., Ltd.)
*3 : hydrotalcite ($Mg_{4.2}Al_2(OH)_{13}(CO_3) \cdot 3H_2O$ manufactured by Kyowa Chemical Industry Co., Ltd.)
*4:tetrakis[methylene-3-(3',5'-di-tert-butyl-4'-hydroxyphenyl)propionate]met hane
*5: 1,3,5-tris(2-hydroxydiethyl)isocyanurate

[Comparative examples from 1 to 4]

Components described in the following Table 2 were mixed to manufacture the comparative stabilization compositions from 1 to 4.

[Table 2]

| | | Comparative example | | | |
|---|---|---|---|---|---|
| | | 1 | 2 | 3 | 4 |
| Component (A) | Zinc laurate | 35.0 | 35.0 | 35.0 | |
| | Zinc stearate | | | | 60.0 |
| | Calcium stearate | | | | 20.0 |
| Component (B) | Stearoyl benzoyl methane | 65.0 | | 65.0 | |
| | Dibenzoyl methane | | 65.0 | | 20.0 |
| Component (C) | Ultramarine blue*1 | | | 5.1 | |
| Component (D) | Alkamizer P-93*2 | 300.0 | 300.0 | 300.0 | |
| | Magceler 1*3 | | | | 40.0 |
| Component (E) Phenolic antioxidant*4 | | 10.0 | 10.0 | 10.0 | 5.0 |
| Polyalcohol Compound*5 | | | | | 10.0 |

(continued)

|  | Comparative example | | | |
|---|---|---|---|---|
|  | 1 | 2 | 3 | 4 |
| (parts by mass) | | | | |

*1 : manufactured by HOLLIDAY PIGMENTS
*2 : zinc -modified hydrotalcite ($Mg_{3.0}ZnAl_2(OH)_{12}(CO_3) \cdot 3H_2O$ manufactured by Kyowa Chemical Industry Co., Ltd.)
*3 : hydrotalcite ($Mg_{4.2}Al_2(OH)_{13}(CO_3) \cdot 3H_2O$ manufactured by Kyowa Chemical Industry Co., Ltd.)
*4:tetrakis[methylene-3-(3',5'-di-tert-butyl-4'-hydroxyphenyl)propionate]met hane
*5: 1,3,5-tris(2-hydroxydiethyl)isocyanurate

[Examples from 9 to 16]

<Manufacture and evaluation of transparent vinyl chloride resin composition>

By using the Henschel Mixer, each composition consisting of components described in the following Table 3 was blended to obtain the transparent vinyl chloride resin composition of the present invention. The obtained resin composition was kneaded for 3 minutes with a roll under the condition of 190°C×30rpm (rotation speed of roll) ×0.6 millimeters (thickness of sheet) to manufacture a sheet with a thickness of 0.6 millimeters.
By using the obtained sheet, according to the following ways, a thermal stability test, a transparency test and a coloring resistant property test were carried out. The results are shown in Table 3.

<Thermal stability test>

The obtained sheet was put in the gear oven at 190°C or 200°C to measure the blackening time (minute).

<Coloring resistant property test>

The sheets with a thickness of 0.6 millimeters, obtained as mentioned above, were glued together and a press processing was carried out at 190°C for 5 minutes to manufacture sheets with a thickness of 1 millimeter, and the yellow level (Y.1.) of each sheet obtained was measured.
The sheets with a thickness of 0.6 millimeters obtained as mentioned above were glued together and a press processing was carried out at 190°C for 30 minutes to manufacture sheets with a thickness of 1 millimeter, then the yellow level (Y.1.) of each sheet obtained was measured. By comparing both yellow levels obtained, the thermal resistant coloring properties were evaluated.

<Transparency test>

The sheets with a thickness of 0.6 millimeters obtained as mentioned above were glued together and a press processing was carried out at 190°C for 5 minutes to manufacture sheets with a thickness of 1 millimeter. With respect to the obtained sheets, each Haze value was measured.

[Table 3]

|  | Example | | | | | | | |
|---|---|---|---|---|---|---|---|---|
|  | 9 | 10 | 11 | 12 | 13 | 14 | 15 | 16 |
| Vinyl chloride resins*1 | 100 | 100 | 100 | 100 | 100 | 100 | 100 | 100 |
| Lubricant*2 | 0.5 | 0.5 | 0.5 | 0.5 | 0.5 | 0.5 | 0.5 | 0.5 |
| Stabilization composition-1 | 3.6 |  |  |  | 2.0 | 5.0 |  |  |
| Stabilization composition-2 |  | 3.6 |  |  |  |  |  |  |
| Stabilization composition-3 |  |  | 3.6 |  |  |  |  |  |
| Stabilization composition-4 |  |  |  | 3.6 |  |  |  |  |
| Stabilization composition-5 |  |  |  |  |  |  | 3.6 |  |

(continued)

| | | Example | | | | | | | |
|---|---|---|---|---|---|---|---|---|---|
| | | 9 | 10 | 11 | 12 | 13 | 14 | 15 | 16 |
| Stabilization composition-6 | | | | | | | | | 3.6 |
| Thermal stability (Blackening time:min.) | 190°C | 165 | 165 | 165 | 165 | 150 | 180 | 135 | 135 |
| | 200°C | 105 | 105 | 105 | 105 | 75 | 120 | 90 | 90 |
| Coloring resistant properties (Y.1.) | 5 min. | 12.1 | 4.8 | 0.8 | 17.5 | 17.8 | 7.1 | 10.9 | 4.3 |
| | 30 min. | 107.2 | 105.9 | 96.4 | 105.0 | 120.5 | 106.1 | 34.6 | 33.1 |
| Transparency Haze value (%) | | 4.01 | 4.87 | 6.90 | 3.82 | 3.62 | 8.25 | 3.99 | 4.91 |
| (Parts by mass) | | | | | | | | | |
| *1: ZEST 1000Z (manufactured by Shin Dai-Ichi Vinyl Corporation) *2: G-72 (aliphatic acid alcohol ester lubricant (complex ester) (manufactured by Emery Oleochemicals Japan Ltd.) | | | | | | | | | |

[Comparative examples from 5 to 9]

In the same way as examples from 9 to 16, comparative transparent vinyl chloride resins compositions were manufactured by using each composition described in the following table 4, and in the same way as examples from 9 to 16, a thermal stability test, a transparency test and a coloring resistant property test were carried out. The results are shown in Table 4.

[Table 4]

| | | Comparative example | | | | |
|---|---|---|---|---|---|---|
| | | 5 | 6 | 7 | 8 | 9 |
| Vinyl chloride resins*1 | | 100 | 100 | 100 | 100 | 100 |
| Lubricant*2 | | 0.5 | 0.5 | 0.5 | 0.5 | 0.5 |
| Comparative stabilization composition-1 | | 3.6 | 2.0 | 5.0 | | |
| Comparative stabilization composition-2 | | | | | 3.6 | |
| Comparative stabilization composition-3 | | | | | | 3.6 |
| Thermal stability (Blackening time:min.) | 190°C | 165 | 150 | 180 | 135 | 165 |
| | 200°C | 105 | 75 | 120 | 90 | 105 |
| Coloring resistant properties (Y.1.) | 5 min. | 25.4 | 30.6 | 24.2 | 18.1 | -7.4 |
| | 30 min. | 138.1 | 148.4 | 134.8 | 47.2 | 74.1 |
| Transparency Haze value (%) | | 3.85 | 3.49 | 8.14 | 3.61 | 15.8 |
| (Parts by mass) | | | | | | |
| *1: ZEST 1000Z (manufactured by Shin Dai-Ichi Vinyl Corporation) *2: G-72 (aliphatic acid alcohol ester lubricant (complex ester) (manufactured by Emery Oleochemicals Japan Ltd.) | | | | | | |

[Examples 17 and 18]

< Manufacture and evaluation of vinyl chloride resin composition for white building materials >

By using the Henschel Mixer, components described in the following Table 5 were blended to obtain the vinyl chloride resin composition of the present invention.

[Comparative example 10]

By using the Henschel Mixer, components described in the following Table 5 were blended to obtain the comparative vinyl chloride resin composition.

According to the aforementioned way, with regard to the resin compositions obtained in the above examples 17 and 18, and comparative example 10, the thermal stability test and the coloring resistant property test were carried out. The results are shown in Table 5.

[Table 5]

| | | Example | | Comparative example |
|---|---|---|---|---|
| | | 17 | 18 | 10 |
| Vinyl chloride resins*1 | | 100 | 100 | 100 |
| Titanium oxide | | 7.0 | 7.0 | 7.0 |
| Lubricant*2 | | 0.1 | 0.1 | 0.1 |
| Filler*3 | | 7.0 | 7.0 | 7.0 |
| Process aid*4 | | 0.6 | 0.6 | 0.6 |
| Stabilization composition-7 | | 3.2 | | |
| Stabilization composition-8 | | | 3.2 | |
| Comparative stabilization composition-4 | | | | 3.2 |
| Thermal stability (Blackening time:min.) | 190°C | 120 | 120 | 120 |
| | 200°C | 60 | 60 | 60 |
| Coloring resistant properties (Y.1.) | 5 min. | 12.7 | 10.4 | 14.7 |
| | 30 min. | 29.7 | 27.6 | 31.5 |
| (Parts by mass) | | | | |
| *1: ZEST 1000Z (manufactured by Shin Dai-Ichi Vinyl Corporation) *2: polyethylene wax *3: calcium carbonate *4: acrylic process aid | | | | |

As is clear from the results shown in Tables from 3 to 5, it was confirmed that, by blending the stabilization composition of the present invention with a vinyl chloride resin, a vinyl chloride resin composition having improved coloring resistant properties can be obtained without decreasing thermal stability.

Especially, even in the case of a vinyl chloride resin composition for transparent products among the above vinyl chloride resin compositions obtained, it was confirmed that the coloring resistant properties were improved without decreasing thermal stability and transparency.

Furthermore, it was confirmed that, when the blending amount of (C) a blue pigment is more than 5.0 parts by mass relative to the total of 100 parts by mass of (A) an organic acid calcium salt and/or an organic acid zinc salt and (B) a β-diketone compound, the resin is colored to cyan (comparative example 9), therefore, not only coloring resistant properties but also transparency is markedly decreased.

INDUSTRIAL APPLICABILITY

The stabilizer composition for vinyl chloride resins of the present invention can provide a vinyl chloride resin with excellent coloring resistant properties without decreasing thermal stability, with no use of heavy metal stabilizer components such as higher toxic tin, lead, cadmium and barium, but by adding only a small amount of the stabilizer composition for a vinyl chloride resin of the present invention to a vinyl chloride resin. In addition, the vinyl chloride resin composition of the present invention obtained can be preferably used for building materials/building products; interior and exterior materials for automobiles; coating materials for electric wire; agricultural materials; food packaging materials and other molded articles, especially transparent products. Therefore, the present invention is highly useful industrially.

**Claims**

1.  A stabilizer composition for vinyl chloride resins comprising; (A) an organic acid calcium salt and/or an an organic acid zinc salt, (B) a β-diketone compound and (C) a blue pigment, wherein the ratio by mass (A) : (B) of said components (A) and (B) ranges from 99.9 : 0.1 to 15.0 : 85.0 and the content of said component (C) ranges from 0.1 to 5.0 parts by mass relative to the total of 100 parts by mass of said components (A) and (B).

2.  The stabilizer composition for vinyl chloride resins according to Claim 1, wherein, the content of (D) a hydrotalcite compound ranges from 1.0 to 600 parts by mass relative to the total of 100 parts by mass of said components (A) and (B).

3.  The stabilizer composition for vinyl chloride resins according to Claim 1 or 2, wherein, the content of (E) a phenolic antioxidant ranges from 1.0 to 50.0 parts by mass relative to the total of 100 parts by mass of said components (A) and (B).

4.  The stabilizer composition for vinyl chloride resins according to any one of Claims from 1 to 3, wherein an organotin compound is not contained.

5.  The stabilizer composition for vinyl chloride resins according to any one of Claims from 1 to 4, wherein none of a lead compound, a cadmium compound or a barium compound is contained.

6.  The stabilizer composition for vinyl chloride resins according to any one of Claims from 1 to 5, wherein a blue pigment of said component (C) is an ultramarine.

7.  The stabilizer composition for vinyl chloride resins according to any one of Claims from 1 to 6, wherein the ratio by mass (A) : (B) of said components (A) and (B) ranges from 90.0 : 10.0 to 20.0 : 80.0.

8.  A vinyl chloride resin composition, wherein a vinyl chloride resins and the stabilizer composition for vinyl chloride resins according to any one of Claims from 1 to 7 are contained.

9.  A transparent vinyl chloride resin composition, wherein the stabilizer composition for vinyl chloride resins according to Claim 7 is contained.

10. A molded article consisting of the vinyl chloride resin composition according to Claim 8.

11. A transparent molded article consisting of the transparent vinyl chloride resin composition according to Claim 9.

# INTERNATIONAL SEARCH REPORT

| International application No. |
|---|
| PCT/JP2015/004402 |

**A. CLASSIFICATION OF SUBJECT MATTER**
*C08L27/06*(2006.01)i, *C08K3/00*(2006.01)i, *C08K3/26*(2006.01)i, *C08K3/34* (2006.01)i, *C08K5/07*(2006.01)i, *C08K5/098*(2006.01)i, *C08K5/13*(2006.01)i

According to International Patent Classification (IPC) or to both national classification and IPC

**B. FIELDS SEARCHED**

Minimum documentation searched (classification system followed by classification symbols)
C08L27/06, C08K3/00, C08K3/26, C08K3/34, C08K5/07, C08K5/098, C08K5/13

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2008-214480 A (ADEKA Corp.), 18 September 2008 (18.09.2008), claims; paragraphs [0032] to [0034]; examples (Family: none) | 1-11 |
| X | JP 63-046248 A (Kyowa Chemical Industry Co., Ltd.), 27 February 1988 (27.02.1988), claims; page 7, upper left column, line 9 to upper right column, line 2; examples & US 4751261 A claims; column 7, lines 13 to 23; examples & EP 256872 A2 & DE 3774209 A | 1-11 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 September 2015 (15.09.15) | 17 November 2015 (17.11.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/004402

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | WO 2012/111240 A1  (ADEKA Corp.),<br>23 August 2012 (23.08.2012),<br>claims; paragraph [0069]; examples<br>& US 2013/0317157 A1<br>claims; paragraph [0084]; examples<br>& JP 2012-167232 A    & EP 2676997 A1<br>& CN 103339189 A | 1-11<br>1-11 |
| X<br>Y | WO 2012/160943 A1  (ADEKA Corp.),<br>29 November 2012 (29.11.2012),<br>claims; paragraph [0063]; examples<br>& US 2014/0066559 A1<br>claims; paragraph [0078]; examples<br>& JP 2012-241119 A     & EP 2711393 A1<br>& CN 103476857 A | 1-11<br>1-11 |
| Y | JP 56-136850 A  (Adeka Argus Chemical Co.,<br>Ltd.),<br>26 October 1981 (26.10.1981),<br>claims; examples<br>(Family: none) | 1-11 |
| Y | JP 62-091548 A  (Adeka Argus Chemical Co.,<br>Ltd.),<br>27 April 1987 (27.04.1987),<br>claims; examples<br>(Family: none) | 1-11 |
| Y | JP 8-092447 A  (Mitsubishi Chemical Corp.),<br>09 April 1996 (09.04.1996),<br>claims; examples<br>(Family: none) | 1-11 |
| Y | JP 2001-316549 A  (Katsuta Kako Kabushiki<br>Kaisha),<br>16 November 2001 (16.11.2001),<br>claims; examples<br>(Family: none) | 1-11 |
| Y | JP 4-202452 A  (Katsuta Kako Kabushiki Kaisha),<br>23 July 1992 (23.07.1992),<br>claims; examples<br>(Family: none) | 1-11 |
| Y | JP 62-022842 A  (Dainippon Ink and Chemicals,<br>Inc.),<br>31 January 1987 (31.01.1987),<br>claims; examples<br>(Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0967489 A

- JP 2003160707 A